# EUROPEAN PATENT APPLICATION

(11) **EP 1 898 531 A2**
(43) Date of publication of application: **12.03.2008**
(21) Application number: 07016930.5
(22) Date of filing: 29.08.2007
(51) Int. Cl.: H04B 1/707

(54) **Method for terminal to search for base station, base station, terminal and system**

(30) Priority: 29.08.2006 CN 200610128621; 24.08.2007 CN 200710146659
(71) Applicant: NTT DoCoMo Inc., Chiyoda-ku Tokyo 100-6150 (JP)
(72) Inventor: Xiaoming, Dai, Haidian District Beijing, 100080 (CN); Yong, Bai, Haidian District Beijing, 100080 (CN); Lan, Chen, Haidian District Beijing, 100080 (CN)
(74) Representative: Zinkler, Franz

(57) **Abstract**

The present invention provides a method for a terminal to search for a base station, and a base station, a terminal and a system using the method. The base station comprises a sequence generating unit for generating a pseudo random sequence by cyclically shifting a specific sequence; a cyclically shifting unit for cyclically shifting the pseudo random sequence with a predetermined length; an adding unit, for adding the pseudo random sequence to the cyclically shifted sequence one chip by one chip so as to form a pilot code specific to the base station; and a transmitting unit for transmitting the pilot code. The present invention can obviously reduce the time for the terminal to find the base station, reduce the power cost without changing conventional receiving algorithms and improve the system performance.

## Description

### Field of the Invention

The present invention relates to an information processing technology, more particularly to a method for a terminal to search for a base station and more particularly to a base station, a terminal and a system.

### Background of the Invention

In a communication system, or a broadcast system etc, when a mobile terminal or a fixed terminal is turned on, it needs to search for a base station with strongest signal intensity to perform communication or to receive signal. The synchronization and channel estimation of the mobile station is normally based on the training sequence with a specific length and a good correlation characteristic.

In a traditional cellular system, different base stations transmit different sequences with good correlation property and the terminal needs to perform a matching correlation for all possible sequences to differentiate a base station with the strongest signal intensity. If there are multiple base stations which transmit sequences, the terminal needs to perform an exhaustive matcher-filter operation to determine the base station with the strongest signal intensity, thus costs large computing resources and battery power, which is disadvantageous for power-stringent terminals, especially for mobile terminals.

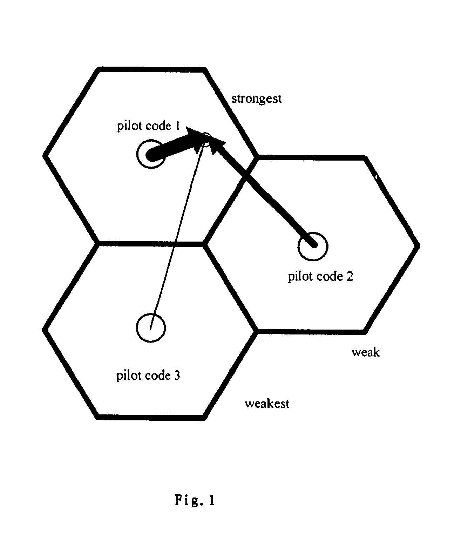

Taking the mobile terminal as an example, a first step for the mobile terminal to access the system is to achieve synchronization with the optimal cell. This process is realized through capturing a pilot code of the cell. In the system shown in Fig.1, cell 1 (the cell covered by base station 1) is the nearest to the mobile terminal, cell 2 (the cell covered by base station 2) is the second nearest to the mobile terminal and cell 3 (the cell covered by base station 3) is the furthest to the mobile terminal. According to a traditional algorithm, the mobile terminal needs to perform correlation for the received signal and three pilot codes respectively from the three cells, compare the correlation results and determine the cell whose pilot code corresponds to the strongest signal intensity.

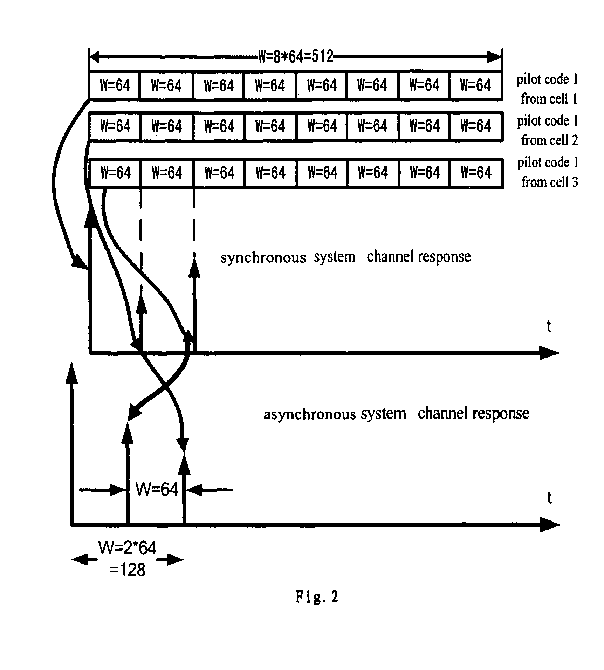

A synchronous system in which time differences of signal transmission from base stations are fixed can differentiate different base stations by transmitting cyclically shifted pilot codes. Fig.2 shows a cyclically shifted pilot code transmission and receiving mechanism in synchronous and asynchronous systems. As shown in Fig.2, cell 1 transmits pilot code 1, cell 2 transmits the code which is obtained by cyclically shifting pilot code 1 with 64 chips and cell 3 transmits the code which is obtained by cyclically shifting pilot code 1 with 128 chips. The mobile terminal performs the matcher-filter operation for the received signal and the pilot code 1 and gets the result of channel impulse response shown in Fig.2. Through analysis on the channel impulse response, pilot codes used by different cells can be differentiated and it can be determined the pilot code used by the strongest cell is pilot code 1.

In a asynchronous system in which time differences of signal transmissions from different base stations are not fixed, as shown in the bottom part in Fig.2, pilot code transmission timings of cell 2 and cell 3 are not fixed and the mobile terminal cannot differentiate cell 2 and cell 3 by the channel impulse response obtained based on the matcher-filter operation.

Since the asynchronous system is generally used, the matcher-filter operation should be performed for all possible pilot codes if exist.

Therefore, it is necessary to design a method and apparatus to speed up the terminal to search for the base station, which can significantly reduce the time before the terminal finds the base station and can reduce the power cost of the terminal.

### Summary of the Invention

An objective of the present invention is to provide a method for a terminal to search for a base station, and a base station, a terminal and a system using the method.

According to one aspect of the present invention, a base station is provided and the base station includes a sequence generating unit, for generating a pseudo random sequence by cyclically shifting a specific sequence; a cyclically shifting unit, for cyclically shifting the pseudo random sequence with a predetermined length; an adding unit, for adding the pseudo random sequence to the cyclically shifted sequence chip by chip so as to form a pilot code specific to the base station; and a transmitting unit, for transmitting the pilot code.

According to another aspect of the present invention, a terminal is provided and the terminal includes a matcher-filter operation unit, for performing a matcher-filter operation for a received signal with a local code so as to obtain a channel impulse response; and a determination unit, for determining signal intensities of different base stations and pilot codes used by different base stations according to amplitudes of channel impulse signals and distances between peaks of the channel impulse signals so as to find a base station with the strongest signal intensity and the pilot code used by the base station.

According to another aspect of the present invention, a system is provided and the system includes a sequence generating unit, for generating a pseudo random sequence by cyclically shifting a specific sequence, a cyclically shifting unit, for cyclically shifting the pseudo random sequence with a predetermined length, an adding unit, for adding the pseudo random sequence to the cyclically shifted sequence chip by chip so as to form a pilot code specific to the base station, and a transmitting unit, for transmitting the pilot code; the terminal includes: a matcher-filter operation unit, for performing the matcher-filter operation for a received signal with a local code respectively so as to obtain a channel impulse response, and a determination unit, for determining signal intensities of different base stations and pilot codes used by different base stations according to amplitudes of channel impulse signals and distances between peaks of the channel impulse signals so as to find a base station with the strongest signal intensity and the pilot code used by the base station.

According to another aspect of the present invention, a method for a terminal to search for a base station is provided, wherein the base station generates a pseudo random sequence by cyclically shifting a specific sequence; the base station cyclically shifts the pseudo random sequence with a predetermined length by, wherein different base stations cyclically shift the pseudo random sequence with different predetermined lengths; the base station adds the pseudo random sequence to the cyclically shifted sequence one chip by one chip so as to form a pilot code and to transmit the pilot code; the terminal performs a matcher-filter operation for a received signal with a local code and determines a pilot code corresponding to the base station with the strongest signal intensity according to amplitudes of channel impulse signals and distances between peaks of channel impulse signals based on the matcher-filter operation.

The advantageous effect of the present invention is that in general systems such as in the communication system or the broadcast system, the above solution of the present invention can significantly reduce the time for the terminal (such as a handset, PDA or radio) to find the base station and the power cost without changing conventional receiving algorithms and can improve the system performance.

### Brief Description of the Drawings

Preferred embodiments of the present invention will be explained with reference to the accompanying drawings, wherein:
Fig. 1 is a schematic diagram showing a mobile terminal searching for a cell in a cellular system;
Fig.2 shows a cyclically shifted pilot code transmission and receiving mechanism in synchronous and asynchronous systems;
Fig.3 is a schematic diagram showing a principle of the method for the terminal to search for the base station according to an embodiment of the present invention;
Fig.4 is a schematic diagram showing architecture of a base station according to an embodiment of the present invention;
Fig.5 is a schematic diagram showing architecture of the terminal according to an embodiment of the present invention;
Fig.6 is an example showing how the terminal searches for the base station according to an embodiment of the present invention; and
Fig. 7 is a schematic diagram showing architecture of a base station according to a modification embodiment of the present invention.

### Detailed Description of the Invention

Specific embodiments of the present invention will be described with a cellular system as an example. Those skilled in the art should understand the present invention is not thus limited and can be applied to other wireless communication systems such as the broadcast system etc.

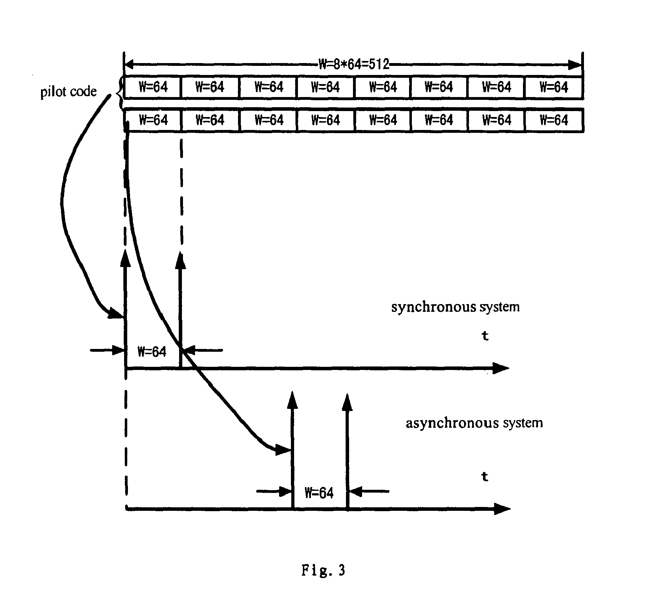

Fig.3 is a schematic diagram showing a principle of the method for the terminal to search for the base station according to an embodiment of the present invention.

As shown in Fig.3, in a synchronous system and an asynchronous system, advances or lags of beginning timing of signal transmission will not change a distance between peaks of the channel impulse response at the receiver (terminal). Therefore, the intensity of cell signal can be determined according to a pilot code with a predetermined cyclically shifted length.

According to the principle shown in Fig.3, a method for a terminal to search for a base station is provided and includes following steps:
a) The base station generates a pseudo random sequence by cyclically shifting a specific sequence. It should be noted that all the base stations generate pseudo random sequences by cyclically shifting the same specific sequence and pseudo random sequences generated by different base stations have different cyclically shifting lengths over the specific sequence.
b) The base station cyclically shifts the pseudo random sequence with a predetermined length, wherein different base stations cyclically shift the pseudo random sequences with different predetermined lengths.
c) The base station adds the pseudo random sequence to the sequence being cyclically shifted in step b) one chip by one chip so as to form a pilot code and to transmit the pilot code.
d) The terminal performs matcher-filter operation for a received signal with a specific sequence and determines a pilot code corresponding to the base station with the strongest signal intensity according to an amplitude of the channel impulse signal and a distance between peaks of the channel impulse signal so as to find the base station with the strongest signal intensity.

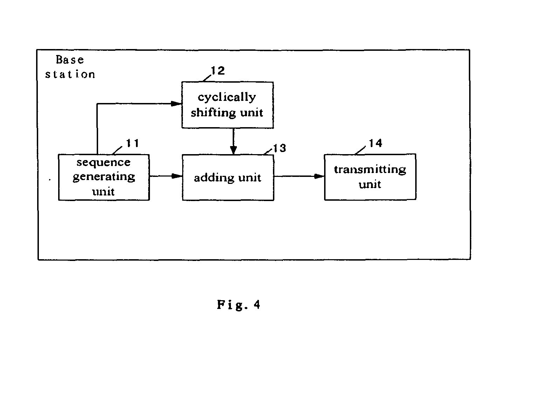

Fig.4 is a schematic diagram showing architecture of the base station according to an embodiment of the present invention.

As shown in Fig.4, the base station includes a sequence generating unit 11, a cyclically shifting unit 12, an adding unit 13 and a transmitting unit 14.

The sequence generating unit 11 generates a pseudo random sequence and transmits the pseudo random sequence to the cyclically shifting unit 12 and the adding unit 13 so as to generate a pilot code. All the base stations generate pseudo random sequences by cyclically shifting the same specific sequence and pseudo random sequences generated by different base stations have different cyclically shifting lengths over the specific sequence.

The cyclically shifting unit 12 cyclically shifts the pseudo random sequence from the sequence generating unit 11 with a predetermined length, such as 64 code chips, and transmits the shifted sequence to the adding unit 13. It should be noted that different base stations cyclically shift the pseudo random sequences with different predetermined lengths. For example, another base station may cyclically shift the pseudo random sequence with 128 code chips.

The adding unit adds the pseudo random sequence to the sequence being cyclically shifted by the cyclically shifting unit 12 one chip by one chip so as to form a pilot code specific to the base station. It should be noted that different base stations cyclically shift the pseudo random sequences with different predetermined lengths, and different cyclically shifting lengths correspond to different distances between peaks of the channel impulse signal, so that respective base stations corresponding to different pilot codes can be determined at the terminal according to the principle shown in Fig.3.

The transmitting unit 14 transmits the pilot code from the adding unit 13.

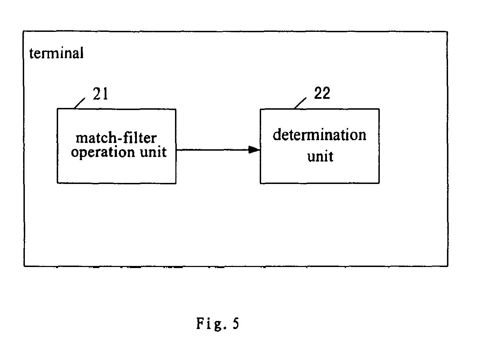

Fig.5 is a schematic diagram showing architecture of the terminal according to an embodiment of the present invention.

As shown in Fig.5, a terminal according to the embodiment includes a matcher-filter operation unit 21 and a determination unit 22.

After the terminal receives the signal, the matcher-filter operation unit 21 performs the matcher-filter operation for the received signal with the specific sequence so as to obtain the channel impulse response and transmits the channel impulse response to the determination unit 22. The terminal can perform the matcher-filter operation by using a local code for the matcher-filter operation which can be the specific sequence, pilot code 1, pilot code 2, or pilot code 3.The determination unit 22 determines signal intensities of different base stations and pilot codes used by different base stations according to amplitudes of the channel impulse signals and distances between peaks of the channel impulse signals from the matcher-filter operation unit 21 so as to find the cell with the strongest signal intensity (finding the base station with the strongest signal intensity, which covers the cell with the strongest signal intensity) and the pilot code used by the found base station to expedite the cell search process.

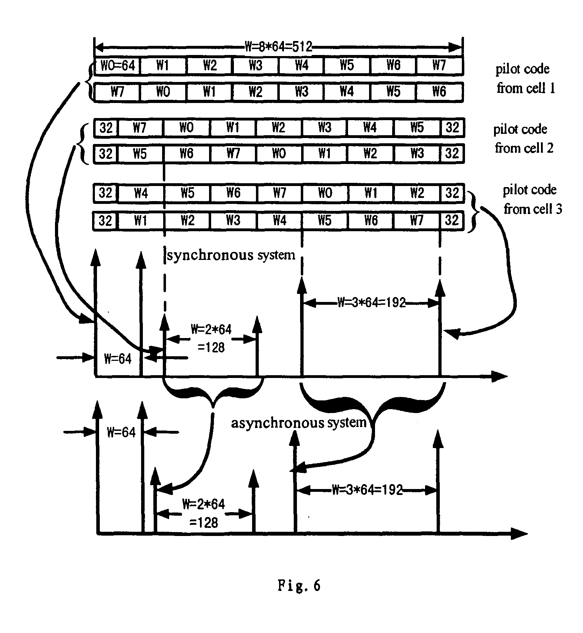

Fig.6 is an example showing how the terminal searches for the base station according to an embodiment of the present invention.

As shown in Fig.6, the pilot codes 1, 2 and 3 transmitted by the cells 1, 2 and 3 are generated according to the same specific sequence (i.e. the sequence at the first row in Fig.6 with 512 code chips in WO-W7).

The pilot code 1 transmitted by the cell 1 is generated by the sequence generating unit 11, the cyclically shifting unit 12, the adding unit 13 and the transmitting unit 14 in the base station # 1 covering the cell 1. It is assumed that the pseudo random sequence A generated by the sequence generating unit 11 is the specific sequence, the cyclically shifting unit 12 cyclically shifts the pseudo random sequence A with 64 code chips to form a sequence B, the adding unit 13 adds the pseudo random sequence A to the sequence B to generate the pilot code 1 and then the transmitting unit 14 transmits the pilot code 1.

It is assumed that the pseudo random sequence generated by the base station # 2 covering the cell 2 is a sequence C obtained by cyclically shifting the specific sequence A with 96 (32+64) code chips, and the base station # 2 cyclically shifts the sequence C with 128 (64*2) code chips to obtain a sequence D and adds the sequence C to D to get the pilot code 2.

The pseudo random sequence generated by the base station # 3 covering the cell 3 is a sequence E obtained by cyclically shifting the specific sequence A with 288 (32+4*64) code chips, and the base station # 3 cyclically shifts the sequence E with 192 (64*3) code chips to obtain a sequence F and adds the sequence E to F to get the pilot code 3.

The terminal performs the matcher-filter operation for the received signal with the specific sequence (or other local code) and gets the channel impulse response diagram for the synchronous system and the asynchronous system shown in the bottom part in Fig.6. According to the amplitudes of the channel impulse signals and the distances (64 code chips corresponding to sequence B, 128 code chips corresponding to sequence D, 192 code chips corresponding to sequence F) between peaks of the channel impulse signals, it can be determined quickly the signal intensities of different base stations (cells) and the pilot codes used by different base stations so that the cell search process is expedited and the process of the terminal searching for the base station is realized.

With the above solution of the present invention, in general systems such as in the communication system or the broadcast system, the terminal (such as a handset, PDA or radio) can obviously reduce the time for finding the base station and the power cost without changing conventional receiving algorithms, which will significantly improve the system performance.

### Modification Embodiment

In the above embodiment a case in which pilot codes 1, 2, and 3 transmitted in the three cells are generated based on the same specific sequence is illustrated. However, in a case where there are multiple cells (for example 30 cells), the pilot codes may be grouped according to the present embodiment, i.e. multiple different pilot codes being cyclically shifted by the same predetermined length are assigned to a same group so as to obviously reduce the time for the terminal to find the base station, to reduce the power cost without changing conventional receiving algorithms and to improve the system performance.

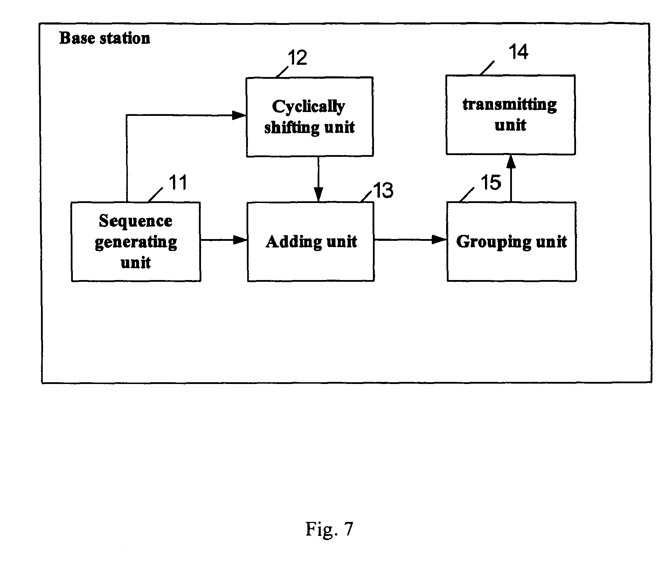

Fig. 7 is a schematic diagram showing architecture of a base station according to a modification embodiment of the present invention. The difference between the base station shown in Fig. 7 and that shown in Fig. 4 is that the base station according to the modification embodiment further includes a grouping unit 15. Since the other components of the base station are the same as that in Fig. 4, they will not be illustrated in detail here.

As shown in Fig. 7, after the adding unit 13 generates the pilot code (such as pilot code A1 for base station 1) specific to the base station by adding the pseudo random sequence from the sequence generating unit 11 to the sequence being cyclically shifted by the cyclically shifting unit 12 one chip by one chip, the grouping unit 15 performs a dot product operation on the pilot code A1 and a predetermined value so as to form the pilot code A2 specific to the base station 2. The pilot code A2 and the pilot code A 1 have the same cyclically shifting length over the specific sequence and the distances between peaks of the channel impulse response are the same so that the base stations 1 and 2 corresponding to the pilot code A 1 and the pilot code A2 can be assigned to the same pilot code group.

Multiple pilot codes with the same cyclically shifting length of the specific sequence can be formed if the grouping unit 15 performs the dot product operation on the pilot code A1 with different predetermined values and the multiple pilot codes can be assigned to the first pilot code group. In the first base station group corresponding to the first pilot code group, each base station has a corresponding specific pilot code. Similarly, the grouping unit 15 may perform the dot product operation on the pilot code 2 with different predetermined values (or codes) so as to form multiple pilot codes with the same cyclically shifting length over a specific sequence and the multiple pilot codes may be assigned to the second pilot code group.

In other words, the grouping unit 15 divides pilot codes into different groups according to different predetermined cyclically shifting lengths over the specific sequence. In addition to the above dot product operation, other methods can also be used as long as the generated pilot codes have the same cyclically shifting length over a specific sequence.

Therefore, after the terminal receives the signal, the matcher-filter operation unit 21 performs the matcher-filter operation for the received signal with the specific sequence so as to obtain a channel impulse response and then sends the channel impulse response to the determination unit 22.

The determination unit 22 determines the base station group with the strongest signal intensity according to amplitudes of the channel impulse signals and distances between peaks of the channel impulse signals from the matcher-filter operation unit 21, and then the matcher-filter operation unit 21 performs traditional matcher-filter operation by using each pilot code in the pilot code group corresponding to the determined base station group with the strongest signal intensity so as to find the cell with the strongest signal intensity (finding the base station with the strongest signal intensity, which covers the cell with the strongest signal intensity) and the pilot code used by the found base station to expedite the cell search process.

According to the communication system according to the modification embodiment, by dividing pilot codes of different base stations into different groups according to different predetermined cyclically shifting lengths over the same specific sequence (or other local code), the terminal (such as a handset, PDA or radio) can further reduce the time for finding the base station and the power cost without changing conventional receiving algorithms, which will significantly improve the system performance.

It should be appreciated that the present invention is described as above with reference to the preferred embodiments, which however do not serve as limitations to the invention. It will be apparent to those skilled in the art that various modifications and variations may be made in the present invention. Thus, it is intended that the present invention covers the modifications and variations of this invention provided they come within the scope of the appended claims and their equivalents.

## Claims

1. A base station, comprising:
a sequence generating unit, for generating a pseudo random sequence by cyclically shifting a specific sequence;
a cyclically shifting unit, for cyclically shifting the pseudo random sequence with a predetermined length;
an adding unit, for adding the pseudo random sequence to the cyclically shifted sequence chip by chip so as to form a pilot code specific to the base station; and
a transmitting unit, for transmitting the pilot code.

2. The base station according to claim 1, wherein
different base stations cyclically shift the specific sequence with different lengths to form pseudo random sequences corresponding to different base stations and different base stations cyclically shift the pseudo random sequences with different predetermined lengths.

3. The base station according to claim 1, further comprising:
a grouping unit, for generating a plurality of pilot codes with a same predetermined cyclically shifting lengths over the specific sequence according to the pilot code generated by the adding unit, and for assigning the plurality of pilot codes to one pilot code group,
different pilot code groups have different predetermined cyclically shifting lengths over the same specific sequence.

4. The base station according to anyone of claims 1 to 3, wherein
the base station is applied to a communication system or in a broadcast system.

5. A terminal, comprising:
a matcher-filter operation unit, for performing matcher-filter operation for a received signal with a local code for matcher-filter operation so as to obtain a channel impulse response; and
a determination unit, for determining signal intensities of different base stations and pilot codes used by different base stations according to amplitudes of channel impulse signals and distances between peaks of the channel impulse signals so as to find a base station with the strongest signal intensity and the pilot code used by the base station.

6. The terminal according to claim 5, wherein
the local code used in the matcher-filter operation is a specific sequence which is cyclically shifted different length to generate pilot codes of respective base stations or the pilot code of any base station.

7. The terminal according to claim 6, wherein the terminal comprises a handset, a PDA or a radio and the terminal is used in a communication system or in a broadcast system.

8. The terminal according to claim 5, wherein
the determination unit determines signal intensities of different base station groups and the pilot code groups corresponding to different base station groups according to amplitudes of channel impulse signals and distances between peaks of the channel impulse signals so as to find a base station group with the strongest signal intensity and pilot code group used by the base station group wherein different pilot code groups have different predetermined cyclically shifting lengths over the specific sequence;
the matcher-filter operation unit performs the matcher-filter operation respectively by using each pilot code in determined pilot code group so as to find a base station with the strongest signal intensity and the pilot code used by the base station.

9. A system, comprising a base station and a terminal, wherein the base station comprises:
a base station, comprising:
a sequence generating unit, for generating a pseudo random sequence by cyclically shifting a specific sequence,
a cyclically shifting unit, for cyclically shifting the pseudo random sequence with a predetermined length,
an adding unit, for adding the pseudo random sequence to the cyclically shifted sequence chip by chip so as to form a pilot code specific to the base station; and
a terminal, comprising:
a matcher-filter operation unit, for performing the matcher-filter operation for a received signal with a local code for matcher-filter operation so as to obtain a channel impulse response, and a determination unit, for determining signal intensities of different base stations and pilot codes used by different base stations according to amplitudes of channel impulse signals and distances between peaks of the channel impulse signals so as to find a base station with the strongest signal intensity and the pilot code used by the base station.

10. The system according to claim 9, wherein
different base stations generate pseudo random sequences according to a same specific sequence and different base stations cyclically shift the specific sequence with different lengths to form pseudo random sequences corresponding to different base stations.

11. The system according to claim 10, wherein
the base station further comprises:
a grouping unit, for generating a plurality of pilot codes with a same predetermined cyclically shifting lengths over the specific sequence according to the pilot code generated by the adding unit, and for assigning the plurality of pilot codes to one pilot code group,
different pilot code groups have different predetermined cyclically shifting lengths over the same specific sequence.

12. The system according to claim 9, wherein the terminal comprises a handset, a PDA or a radio and the terminal is used in a communication system or in a broadcast system.

13. The system according to claim 9, wherein in the terminal,
the determination unit determines signal intensities of different base station groups and the pilot code groups corresponding to different base station groups according to amplitudes of channel impulse signals and distances between peaks of the channel impulse signals so as to find a base station group with the strongest signal intensity and pilot code group used by the base station group wherein different pilot code groups have different predetermined cyclically shifting lengths over the specific sequence;
the matcher-filter operation unit performs the matcher-filter operation respectively by using each pilot code in determined pilot code group so as to find a base station with the strongest signal intensity and the pilot code used by the base station.

14. A method for a terminal to search for a base station, comprising steps of:
generating a pseudo random sequence by cyclically shifting a specific sequence by the base station;
cyclically shifting the pseudo random sequence with a predetermined length by the base station, wherein different base stations cyclically shift the pseudo random sequence with different predetermined lengths;
adding the pseudo random sequence to the cyclically shifted sequence one chip by one chip by the base station so as to form a pilot code and to transmit the pilot code;
performing the matcher-filter operation for a received signal with a local code and determining a pilot code corresponding to the base station with the strongest signal intensity by the terminal according to amplitudes of channel impulse signals and distances between peaks of channel impulse signals from the computing results.

15. The method according to claim 14, wherein
different base stations generate pseudo random sequences of a same specific sequence by cyclically shifting and different base stations cyclically shift the specific sequence with different lengths to form pseudo random sequences corresponding to different base stations.

16. The method according to claim 14, further comprising
generating a plurality of pilot codes with a same predetermined cyclically shifting lengths over the specific sequence according to the pilot code generated by the adding unit, and assigning the plurality of pilot codes to one pilot code group,
different pilot code groups have different predetermined cyclically shifting lengths over the same specific sequence.

17. The method according to claim 14, wherein
the terminal comprises a handset, a PDA or a radio, and
the terminal is used in a communication system or in a broadcast system.

18. The method according to claim 14, wherein
determining signal intensities of different base station groups and the pilot code groups corresponding to different base station groups according to amplitudes of channel impulse signals and distances between peaks of the channel impulse signals so as to find a base station group with the strongest signal intensity and pilot code group used by the base station group wherein different pilot code groups have different predetermined cyclically shifting lengths over the specific sequence;
performing the matcher-filter operation respectively by using each pilot code in determined pilot code group so as to find a base station with the strongest signal intensity and the pilot code used by the base station.
